(19) Europäisches Patentamt / European Patent Office / Office européen des brevets

(11) **EP 4 579 848 A1**

(12) **EUROPEAN PATENT APPLICATION**
published in accordance with Art. 153(4) EPC


(43) Date of publication:
**02.07.2025 Bulletin 2025/27**

(21) Application number: **22968838.7**

(22) Date of filing: **20.12.2022**

(51) International Patent Classification (IPC):
***H01M 10/0567*** *(2010.01)* ***H01M 10/0525*** *(2010.01)*
***H01M 4/134*** *(2010.01)*

(52) Cooperative Patent Classification (CPC):
**H01M 4/134; H01M 10/0525; H01M 10/0567;**
Y02E 60/10

(86) International application number:
**PCT/CN2022/140265**

(87) International publication number:
**WO 2024/130535 (27.06.2024 Gazette 2024/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**



(71) Applicant: **Dongguan Amperex Technology Limited**
**Dongguan City, Guangdong Province, PRC 523000 (CN)**

(72) Inventors:
- **WANG, Xiang**
  **Dongguan City, Guangdong 523000 (CN)**
- **WANG, Rui**
  **Dongguan City, Guangdong 523000 (CN)**
- **TANG, Chao**
  **Dongguan City, Guangdong 523000 (CN)**

(74) Representative: **Icosa**
**83 avenue Denfert-Rochereau**
**75014 Paris (FR)**


(54) **ELECTROCHEMICAL DEVICE AND ELECTRONIC DEVICE**


(57) An electrochemical device includes a negative electrode plate and an electrolyte, where the negative electrode plate includes a negative electrode active material layer, and the negative electrode active material layer includes a silicon-based material; and the electrolyte includes a compound of formula (I), where in formula (I), X is selected from an oxygen atom or N-$R_8$.

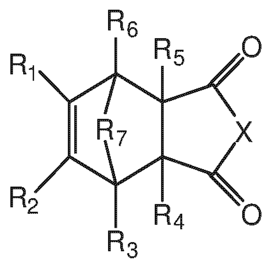

formula (I)


EP 4 579 848 A1

## Description

### TECHNICAL FIELD

This application relates to the field of battery technologies, and more specifically, to an electrochemical device and an electronic device.

### BACKGROUND

As a portable electrochemical device, the lithium-ion batteries have been widely used in electronic products such as mobile phones, notebook computers, and cameras in recent years. As consumers demand longer battery life for electronic products, silicon-based material, due to its theoretical specific capacity, up to 4200 mAh/g, being much greater than that of graphite and its abundant reserves in nature, is considered by many researchers to be the most promising material to replace graphite as the next-generation negative electrode material for lithium-ion batteries to meet consumer demands for long battery life in electronic products. However, during the charge and discharge process of lithium-ion batteries, silicon-based materials are prone to volume swelling and contraction, leading to gaps between active materials, and affecting the migration of electrons and lithium ions. At the same time, the volume swelling and contraction of silicon-based materials can easily cause the solid electrolyte interface (SEI) film to crack. On the one hand, repairing the SEI film consumes the electrolyte and active lithium, causing a decline in cycle life. On the other hand, under high-temperature storage conditions, the side reactions at the fresh interfaces generated by the cracking of the SEI film intensify, reducing high-temperature storage safety. Therefore, at present, the cycling performance and high-temperature storage performance of lithium-ion batteries still need further improvement.

### SUMMARY

This application provides an electrochemical device and an electronic device, which can significantly improve the cycling performance and high-temperature storage performance of the electrochemical device.

According to a first aspect, this application provides an electrochemical device. The electrochemical device includes a negative electrode plate and an electrolyte, where the negative electrode plate includes a negative electrode active material layer, and the negative electrode active material layer includes a silicon-based material; and the electrolyte includes a compound of formula (I), where

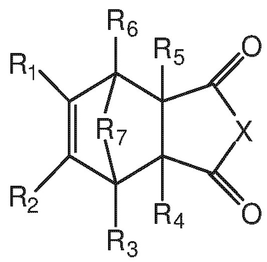

formula (I)

in formula (I), X is selected from an oxygen atom or N-$R_8$; $R_1$, $R_2$, $R_3$, $R_4$, $R_5$, $R_6$, and $R_8$ are each independently selected from a hydrogen atom, a halogen atom, substituted or unsubstituted $C_1$ to $C_{10}$ alkyl groups, substituted or unsubstituted $C_2$ to $C_{10}$ alkenyl groups, substituted or unsubstituted $C_2$ to $C_{10}$ alkynyl groups, substituted or unsubstituted $C_6$ to $C_{10}$ aryl groups, substituted or unsubstituted $C_1$ to $C_{10}$ alkoxy groups, substituted or unsubstituted $C_2$ to $C_{10}$ alkenoxy groups, substituted or unsubstituted $C_2$ to $C_{10}$ alkynoxy groups, substituted or unsubstituted $C_6$ to $C_{10}$ aryloxy groups, substituted or unsubstituted $C_1$ to $C_{10}$ alkoxyalkyl groups, substituted or unsubstituted $C_1$ to $C_{10}$ carboxyl groups, substituted or unsubstituted $C_2$ to $C_{10}$ carboxylic ester groups, substituted or unsubstituted $C_2$ to $C_{10}$ carbonate groups, a cyano group, an amino group, substituted or unsubstituted $C_1$ to $C_{10}$ nitrogen-containing groups, substituted or unsubstituted $C_1$ to $C_{10}$ sulfur-containing groups, substituted or unsubstituted $C_1$ to $C_{10}$ boron-containing groups, substituted or unsubstituted $C_1$ to $C_{10}$ silicon-containing groups, or substituted or unsubstituted $C_1$ to $C_{10}$ phosphorus-containing groups; and $R_7$ is selected from substituted or unsubstituted $C_1$ to $C_{10}$ alkylene groups, substituted or unsubstituted $C_3$ to $C_{10}$ cycloalkylene groups, substituted or unsubstituted $C_1$ to $C_{10}$ oxygen-containing groups, or substituted or unsubstituted $C_1$ to $C_{10}$ nitrogen-containing groups; where in a case of substitution, a substituent group includes at least one of a halogen atom or a cyano group.

With the electrolyte added with the compound of formula (I), the unsaturated double bond in the compound can polymerize into a film on the surface of the silicon-based material, which thereby introduces a rigid bridge ring structure into

the SEI film to suppress the volume swelling of the silicon-based material; at the same time, due to the steric hindrance of the bridge ring structure in the compound of formula (I), a relatively small film-forming impedance can be obtained, and the dense accumulation of by-products on the surface of the active material during the cycle process can be inhibited, promoting the transfer of lithium ions between the active material and the electrolyte; additionally, the compound of formula (I) can also form a film on the positive electrode, where the anhydride/amide structure in the compound can inhibit the destruction of the electrolyte interface film on the surface of the positive electrode material by trace amounts of water and acid in the electrolyte, thereby inhibiting the oxidative decomposition of the solvent on the surface of the positive electrode, and as a result, enhancing the cycling performance and high-temperature storage performance of the electrochemical device.

In some embodiments, based on an area of the negative electrode active material layer, a content of element silicon in the negative electrode active material layer is Y mg/cm$^2$; and based on a mass of the electrolyte, a mass percentage of the compound of formula (I) is a%; satisfying: $0.1 \leq a/Y \leq 20$. In some embodiments, $0.3 \leq a/Y \leq 13.5$.

In some embodiments, $0.01 \leq a \leq 10$. In some embodiments, $0.1 \leq a \leq 5$.

In some embodiments, $0.1 \leq Y \leq 1.55$. In some embodiments, $0.1 \leq Y \leq 1.2$.

In some embodiments, the compound of formula (I) includes at least one of compounds in a range of compound of formula (I-1) to compound of formula (I-20):

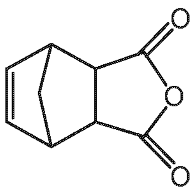 formula (I-1), 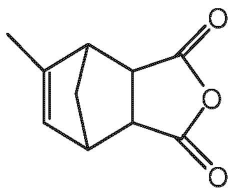 formula (I-2),

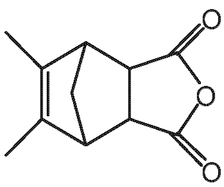 formula (I-3), 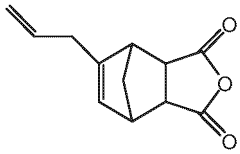 formula (I-4),

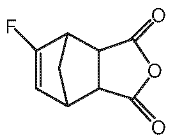 formula (I-5), 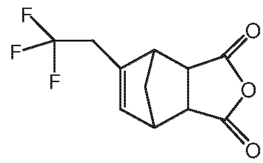 formula (I-6),

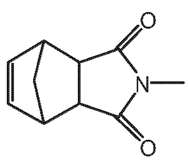 formula (I-7), 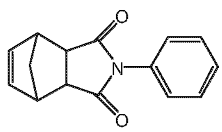 formula (I-8),

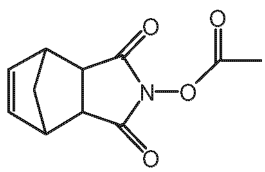 formula (I-9),

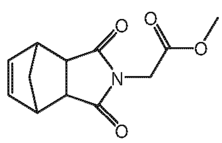 formula (I-10), 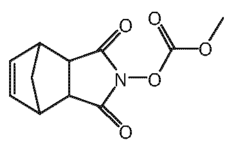 formula (I-11),

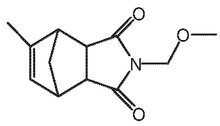 formula (I-12),

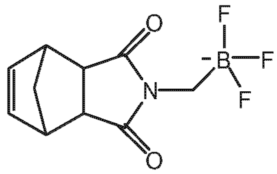 formula (I-13),

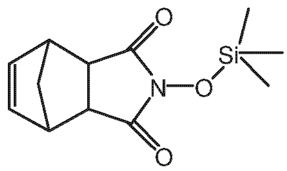 formula (I-14),

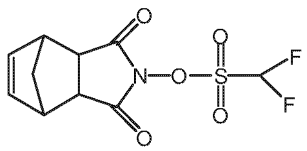 formula (I-15),

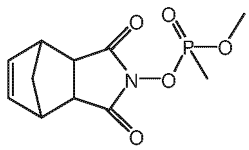 formula (I-16),

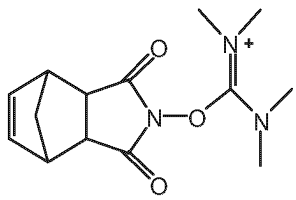 formula (I-17),

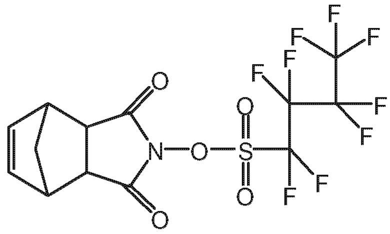 formula (I-18),

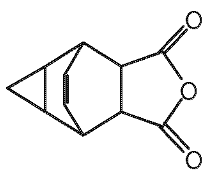 formula (I-19), and 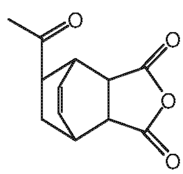 formula (I-20).

In some embodiments, the electrolyte further includes a fluorinated carbonate compound, and based on the

mass of the electrolyte, a mass percentage of the fluorinated carbonate compound is b%, where 1≤b≤22. In some embodiments, 5≤b≤17.

In some embodiments, the electrolyte further includes a carboxylic ester solvent, and based on the mass of the electrolyte, a mass percentage of the carboxylic ester solvent is c%, satisfying: 0.1≤(b/c)/Y≤5.5. In some embodiments, 0.5≤(b/c)/Y≤3.

In some embodiments, 5≤c≤70. In some embodiments, 5≤c≤60.

In some embodiments, the fluorinated carbonate compound includes at least one of fluorinated ethylene carbonate, fluoropropylene carbonate, fluorodiethyl carbonate, difluoroethylene carbonate, bis(trifluoromethyl) carbonate, bis(pentafluoroethyl) carbonate, or bis(2,2,2-trifluoroethyl) carbonate.

In some embodiments, the carboxylic ester solvent includes substituted or unsubstituted carboxylic ester with a total carbon atom quantity of 3 to 10 in the molecule, and in a case of substitution, the substituent group includes the halogen atom.

In some embodiments, the carboxylic ester solvent includes one or more selected from a group consisting of methyl acetate, ethyl acetate, propyl acetate, butyl acetate, methyl propionate, ethyl propionate, propyl propionate, butyl propionate, ethyl fluoroacetate, propyl fluoroacetate, butyl fluoroacetate, ethyl fluoropropionate, propyl fluoropropionate, and butyl fluoropropionate.

In some embodiments, the electrolyte further includes an unsaturated cyclic carbonate compound, where the unsaturated cyclic carbonate compound includes at least one of vinylene carbonate or vinyl ethylene carbonate; and based on a mass of the electrolyte, a mass percentage of the unsaturated cyclic carbonate compound is 0.01% to 5%.

In some embodiments, the electrolyte further includes a cyclic sulfonate compound, where the cyclic sulfonate compound includes at least one of 1,3-propene sultone, 1,3-propane sultone, or 1,4-butane sultone; and based on the mass of the electrolyte, a mass percentage of the cyclic sulfonate compound is 0.01% to 5%;

In some embodiments, the electrolyte further includes an unsaturated nitrile compound, where the unsaturated nitrile compound includes at least one of 3-hexenedinitrile or butenedinitrile; and based on the mass of the electrolyte, a mass percentage of the unsaturated nitrile compound is 0.01% to 5%.

In some embodiments, the electrolyte further includes an unsaturated acid anhydride compound, where the unsaturated acid anhydride compound includes at least one of maleic anhydride, 2,3-dimethylmaleic anhydride, itaconic anhydride, or citraconic anhydride; and based on the mass of the electrolyte, a mass percentage of the unsaturated acid anhydride compound is 0.01% to 5%.

In some embodiments, the electrolyte further includes an unsaturated silane compound, where the unsaturated silane compound includes at least one of triallylmethoxysilane, allyltrimethoxysilane, allyloxytrimethylsilane, or propynyloxytrimethylsilane; and based on the mass of the electrolyte, a mass percentage of the unsaturated silane compound is 0.01% to 5%.

In some embodiments, the silicon-based material includes a matrix and a protective layer located on a surface of the matrix, the protective layer includes an element M, and the element M includes at least one of C, Ti, Al, Zn, S, P, B, or N.

In some embodiments, the matrix includes at least one of a silicon-oxygen composite material, a silicon-carbon composite material, or elemental silicon.

In some embodiments, based on a mass of the protective layer, a content of the element M in the protective layer is 150ppm to 6500ppm. In some embodiments, based on a mass of the protective layer, a content of the element M in the protective layer is 150ppm to 4000ppm.

In some embodiments, the negative electrode active material layer further includes a carbon material; and based on a total mass of the carbon material and the silicon-based material, a mass percentage of the silicon-based material is 2% to 80%.

In some embodiments, a porosity of the negative electrode active material layer is P, where 20%≤P≤40%.

According to a second aspect, this application provides an electronic device, including the electrochemical device according to any embodiment of the first aspect of this application.

In the electrochemical device according to the embodiments of this application, with the electrolyte added with the compound of formula (I), the unsaturated double bond in the compound can polymerize into a film on the surface of the silicon-based material, which thereby introduces a rigid bridge ring structure into the SEI film to suppress the volume swelling of the silicon-based material; at the same time, due to the steric hindrance of the bridge ring structure in the compound of formula (I), a relatively small film-forming impedance can be obtained, and the dense accumulation of by-products on the surface of the active material during the cycle process can be inhibited, promoting the transfer of lithium ions between the active material and the electrolyte; additionally, the compound of formula (I) can also form a film on the positive electrode, where the anhydride/amide structure in the compound can inhibit the destruction of the electrolyte interface film on the surface of the positive electrode material by trace amounts of water and acid in the electrolyte, thereby inhibiting the oxidative decomposition of the solvent on the surface of the positive electrode, and as a result, enhancing the cycling performance and high-temperature storage performance of the electrochemical device.

## DESCRIPTION OF EMBODIMENTS

Embodiments of this application are described in detail below. The embodiments of this application should not be construed as a limitation on this application.

In addition, quantities, ratios, and other values are sometimes presented in the format of ranges in this specification. It should be understood that such format of range is used for convenience and simplicity and should be flexibly understood as including not only values explicitly designated as falling within the range but also all individual values or sub-ranges covered by the range as if each value and sub-range are explicitly designated.

In specific embodiments and claims, a list of items connected by the terms "one or more of", "one or more pieces of", "one or more kinds of" or other similar terms may mean any one of the listed items. For example, if items A and B are listed, the phrase "at least one of A or B" means only A, only B, or A and B. In another example, if items A, B, and C are listed, the phrase "at least one of A, B, or C" means only A, only B, only C, A and B (excluding C), A and C (excluding B), B and C (excluding A), or all of A, B, and C. The item A may include a single element or a plurality of elements. The item B may include a single element or a plurality of elements. The item C may include a single element or a plurality of elements.

The term "halogen atom" refers to a fluorine atom, a chlorine atom, a bromine atom, an iodine atom, and the like.

The term "carboxylic ester group" refers to a group containing -C(=O)-O-.

The term "carbonate group" refers to a group containing -O-C(=O)-O-.

The term "nitrogen-containing group" refers to a group containing a nitrogen atom in the group, including amine group, amide group, and the like.

The term "sulfur-containing group" refers to a group containing a sulfur atom in the group, including alkylthio group, sulfonate group, sulfate group, sulfone group, and the like.

The term "boron-containing group" refers to a group containing a boron atom in the group, including borate group and the like.

The term "silicon-containing group" refers to a group containing a silicon atom, including silane group, silicate group, and the like.

The term "phosphorus-containing group" refers to a group containing a phosphorus atom in the group, including phosphate group, phosphite group, and the like.

## Electrochemical device

According to a first aspect, this application provides an electrochemical device, where the electrochemical device includes a negative electrode plate and an electrolyte, where the negative electrode plate includes a negative electrode active material layer, and the negative electrode active material layer includes a silicon-based material; and the electrolyte includes a compound of formula (I), where

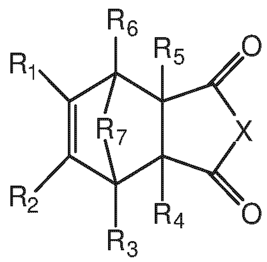
formula (I)

in formula (I), X is selected from an oxygen atom or N-$R_8$; $R_1$, $R_2$, $R_3$, $R_4$, $R_5$, $R_6$, and $R_8$ are each independently selected from a hydrogen atom, a halogen atom, substituted or unsubstituted $C_1$ to $C_{10}$ alkyl groups, substituted or unsubstituted $C_2$ to $C_{10}$ alkenyl groups, substituted or unsubstituted $C_2$ to $C_{10}$ alkynyl groups, substituted or unsubstituted $C_6$ to $C_{10}$ aryl groups, substituted or unsubstituted $C_1$ to $C_{10}$ alkoxy groups, substituted or unsubstituted $C_2$ to $C_{10}$ alkenoxy groups, substituted or unsubstituted $C_2$ to $C_{10}$ alkynoxy groups, substituted or unsubstituted $C_6$ to $C_{10}$ aryloxy groups, substituted or unsubstituted $C_1$ to $C_{10}$ alkoxyalkyl groups, substituted or unsubstituted $C_1$ to $C_{10}$ carboxyl groups, substituted or unsubstituted $C_2$ to $C_{10}$ carboxylic ester groups, substituted or unsubstituted $C_2$ to $C_{10}$ carbonate groups, a cyano group, an amino group, substituted or unsubstituted $C_1$ to $C_{10}$ nitrogen-containing groups, substituted or unsubstituted $C_1$ to $C_{10}$ sulfur-containing groups, substituted or unsubstituted $C_1$ to $C_{10}$ boron-containing groups, substituted or unsubstituted $C_1$ to $C_{10}$ silicon-containing groups, or substituted or unsubstituted $C_1$ to $C_{10}$ phosphorus-containing groups; and $R_7$ is selected from substituted or unsubstituted $C_1$ to $C_{10}$ alkylene groups, substituted or unsubstituted $C_3$ to $C_{10}$ cycloalkylene groups, substituted or unsubstituted $C_1$ to $C_{10}$ oxygen-containing groups, or substituted or unsubstituted $C_1$ to $C_{10}$ nitrogen-containing groups; where in a case of substitution, a substituent group includes at least one of a halogen atom or a

cyano group.

With the electrolyte added with the compound of formula (I), the unsaturated double bond in the compound can polymerize into a film on the surface of the silicon-based material, which thereby introduces a rigid bridge ring structure into the SEI film to suppress the volume swelling of the silicon-based material; at the same time, due to the steric hindrance of the bridge ring structure in the compound of formula (I), a relatively small film-forming impedance can be obtained, and the dense accumulation of by-products on the surface of the active material during the cycle process can be inhibited, promoting the transfer of lithium ions between the active material and the electrolyte; additionally, the compound of formula (I) can also form a film on the positive electrode, where the anhydride/amide structure in the compound can inhibit the destruction of the electrolyte interface film on the surface of the positive electrode material by trace amounts of water and acid in the electrolyte, thereby inhibiting the oxidative decomposition of the solvent on the surface of the positive electrode, and as a result, enhancing the cycling performance and high-temperature storage performance of the electrochemical device.

In some embodiments, based on an area of the negative electrode active material layer, a content of element silicon in the negative electrode active material layer is Y $mg/cm^2$; and based on a mass of the electrolyte, a mass percentage of the compound of formula (I) is a%; satisfying: $0.1 \le a/Y \le 20$.

As the content of the silicon-based material increases (with an increase in Y), the amount of the compound of formula (I) required to form and repair the SEI film also increases. When the electrochemical device satisfies $0.1 \le a/Y$, the formation and repair effect of the SEI film can be improved, suppressing the volume swelling of the silicon-based material and the side reactions on its surface, thereby improving the cycling performance and high-temperature storage performance of the electrochemical device. As the content of the compound of formula (I) continues to increase (with an increase in a), although the formation and repair effect of the SEI film is significantly improved, the SEI film formed on the surface of the active material may be too thick, thereby increasing the direct current impedance of the negative electrode plate and affecting the cycling performance of the electrochemical device. Therefore, in this application, the electrochemical device is regulated as continuously satisfying $a/Y \le 20$, which can improve the cycling performance of the electrochemical device.

Exemplarily, a/Y may be 0.1, 0.2, 0.5, 0.8, 1.0, 1.5, 2, 5, 6, 7, 8, 9, 10, 11, 12, 13, 15, 17, 19, 20, or in a range defined by any two of these values. Optionally, in some embodiments, $0.3 \le a/Y \le 13.5$.

When the content of the compound of formula (I) in the electrolyte is too large, the film-forming impedance is large, which is not conducive to the intercalation and deintercalation of lithium ions; when the content of the compound of formula (I) is too small, which is not conducive to forming a dense and uniform SEI film on the surface of the active material, and cannot provide good protection to the active material. Therefore, in this application, a is further regulated as $0.01 \le a \le 10$ so that a dense and uniform SEI film can be formed, the SEI film can be repaired well, and the formed film has relatively low impedance, which is conducive to improving the kinetic performance of the electrochemical device. Exemplarily, the content a% of the compound of formula (I) may be 0.01%, 0.02%, 0.05%, 0.08%, 0.1%, 0.2%, 0.5%, 0.8%, 1%, 1.2%, 1.5%, 1.8%, 2%, 2.5%, 2.8%, 3%, 3.5%, 3.8%, 4%, 4.5%, 5%, 7%, 8%, 10%, or in a range defined by any two of these values. Optionally, in some embodiments, $0.1 \le a \le 5$.

The negative electrode current collector has two surfaces opposite to each other along its own thickness direction, and the negative electrode active material layer may be disposed on one surface of the negative electrode current collector or on both surfaces of the negative electrode current collector. Y represents a mass of the element silicon in the negative electrode active material layer per unit coating area on a single surface of the negative electrode current collector. Since the silicon-based material has a large volume change during the charge and discharge process, in this application, the content of the element silicon is further regulated as satisfying $0.1 \le Y \le 1.55$, which can ensure the high energy density of the electrochemical device, significantly alleviate the volume change problem of the silicon-based material, and improve the structural stability of the negative electrode plate, thereby improving the cycling performance and high-temperature storage performance of the electrochemical device. Exemplarily, the mass of the element silicon in the negative electrode active material layer per unit coating area on the negative electrode current collector may be $0.1mg/cm^2$, $0.2mg/cm^2$, $0.5mg/cm^2$, $0.8mg/cm^2$, $0.9mg/cm^2$, $1.0mg/cm^2$, $1.1mg/cm^2$, $1.2mg/cm^2$, $1.3mg/cm^2$, $1.4mg/cm^2$, $1.5mg/cm^2$, $1.55mg/cm^2$, or in a range defined by any two of these values. Optionally, in some embodiments, $0.1 \le Y \le 1.2$.

[Electrolyte]

In some embodiments, the compound of formula (I) includes at least one of compounds in a range of compound of formula (I-1) to compound of formula (I-20):

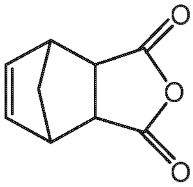 formula (I-1), 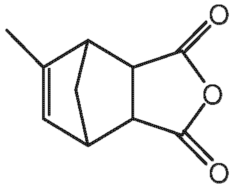 formula (I-2),

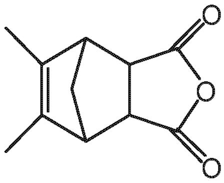 formula (I-3), 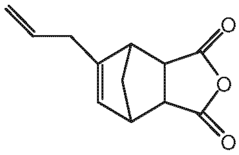 formula (I-4),

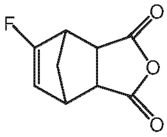 formula (I-5), 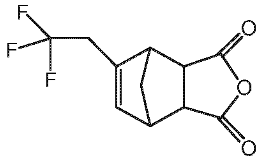 formula (I-6),

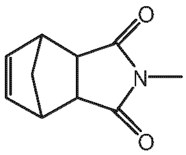 formula (I-7), 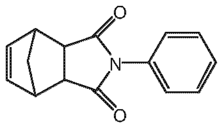 formula (I-8),

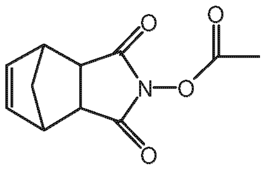 formula (I-9),

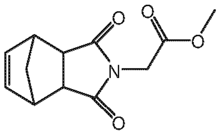 formula (I-10), 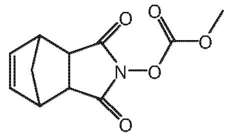 formula (I-11),

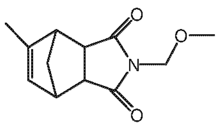 formula (I-12),

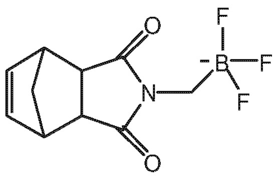 formula (I-13),

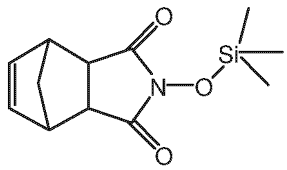

formula (I-14),

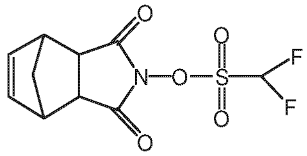

formula (I-15),

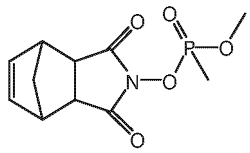

formula (I-16),

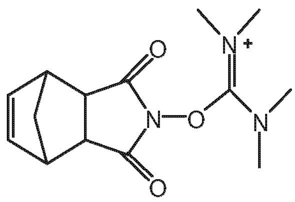

formula (I-17),

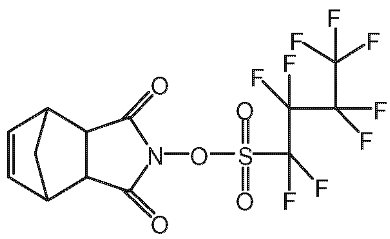

formula (I-18),

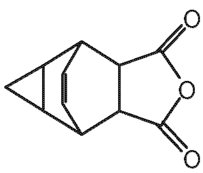 formula (I-19), and 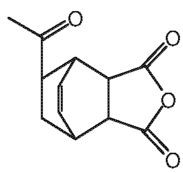 formula (I-20).

As to a foregoing compound, the unsaturated double bond in its molecule can polymerize into a film on the surface of the silicon-based material. In addition, the C=O bond and the -X- bond in the ring can break and cross-link, thereby enabling an in-situ cross-linking reaction on the surface of the silicon-based material, so that the rigid bridge ring structure in the molecule is synchronously introduced into the SEI film, forming a firm and stable SEI film, suppressing the volume swelling of the silicon-based material, thereby improving the cycling performance and high-temperature storage performance of the electrochemical device.

In some embodiments, the electrolyte further includes a fluorinated carbonate compound, and based on the mass of the electrolyte, a mass percentage of the fluorinated carbonate compound is b%, where $1 \leq b \leq 22$. The fluorinated carbonate compound has a fluorine substituent group, where the group has a strong electron-withdrawing ability and is prone to reductive decomposition at a high potential, promoting the formation and repair of the SEI film; and the formed SEI film has a small impedance, which is conducive to the migration of lithium ions and the like, thereby improving the cycling performance of the electrochemical device. Moreover, the HF generated by the decomposition of the fluorinated carbonate compound at high temperatures can be captured by the anhydride/amide structure in a compound of formula (I), which

inhibits its destruction of the positive electrode electrolyte interface film, thereby ensuring the high-temperature storage performance of the electrochemical device.

Exemplarily, the mass percentage b% of the fluorinated carbonate compound relative to the total mass of the electrolyte may be 1%, 3%, 4%, 5%, 6%, 7%, 8%, 9%, 10%, 12%, 13%, 14%, 15%, 16%, 17%, 20%, 22%, or in a range defined by any two of these values. Optionally, $5 \leq b \leq 17$.

Exemplarily, the fluorinated carbonate compound includes at least one of fluorinated ethylene carbonate, fluoropropylene carbonate, fluorodiethyl carbonate, difluoroethylene carbonate, bis(trifluoromethyl) carbonate, bis(pentafluoroethyl) carbonate, or bis(2,2,2-trifluoroethyl) carbonate.

In some embodiments, the electrolyte further includes a carboxylic ester solvent, and based on the mass of the electrolyte, a mass percentage of the carboxylic ester solvent is c%, satisfying: $0.1 \leq (b/c)/Y \leq 5.5$. When the electrolyte contains the carboxylic ester solvent, its ion-conducting ability is greatly enhanced, which can reduce the impedance of the electrochemical device and improve the cycling performance of the electrochemical device. However, the carboxylic ester solvent is unstable on the surface of the silicon-based material and tends to decompose and generate gas at the negative electrode. The fluorinated carbonate compound can undergo reductive decomposition at a high potential, preferentially decomposing into a film on the surface of the silicon-based material before the carboxylic ester solvent, thereby effectively alleviating the reductive decomposition of the carboxylic ester solvent. Moreover, the HF generated by the decomposition of the fluorinated carbonate compound at high temperatures can be captured by the anhydride/amide structure in the compound of formula (I), which inhibits its destruction of the positive electrode electrolyte interface film, thereby ensuring the high-temperature storage performance of the electrochemical device.

In this application, (b/c)/Y is regulated as $0.1 \leq (b/c)/Y \leq 5.5$, so that the carboxylic ester solvent, the fluorinated carbonate compound, and the compound of formula (I) can act synergistically, ensuring the high-temperature storage performance of the electrochemical device while simultaneously improving the impedance of the electrochemical device and the repair ability of the electrolyte to the SEI film, which is conducive to enhancing the cycling performance and kinetic performance of the electrochemical device. Exemplarily, (b/c)/Y may be 0.1, 0.2, 0.4, 0.5, 0.8, 1.0, 1.2, 1.5, 1.8, 2, 2.5, 2.8, 3, 3.5, 4, 5, 5.5, or in a range defined by any two of these values. Optionally, $0.5 \leq (b/c)/Y \leq 3$.

In some embodiments, $5 \leq c \leq 70$. The mass percentage c% of the carboxylic ester solvent may be 5%, 8%, 10%, 15%, 20%, 30%, 35%, 40%, 45%, 50%, 60%, 70%, or in a range defined by any two of these values. The carboxylic ester solvent has relatively low viscosity. The mass percentage of the carboxylic ester solvent being within the above range can improve the ionic conductivity of the electrolyte, enabling the electrochemical device to achieve a higher charge and discharge rate. Optionally, $5 \leq c \leq 60$.

Optionally, the carboxylic ester solvent includes substituted or unsubstituted carboxylic ester with a total carbon atom quantity of 3 to 10 in the molecule, and in a case of substitution, the substituent group includes the halogen atom.

Exemplarily, the carboxylic ester solvent includes at least one of methyl acetate, ethyl acetate, propyl acetate, butyl acetate, methyl propionate, ethyl propionate, propyl propionate, butyl propionate, ethyl fluoroacetate, propyl fluoroacetate, butyl fluoroacetate, ethyl fluoropropionate, propyl fluoropropionate, or butyl fluoropropionate.

In some embodiments, the electrolyte further includes an unsaturated cyclic carbonate compound, where the unsaturated cyclic carbonate compound includes at least one of vinylene carbonate or vinyl ethylene carbonate; and based on a mass of the electrolyte, a mass percentage of the unsaturated cyclic carbonate compound is 0.01% to 5%.

In some embodiments, the electrolyte further includes a cyclic sulfonate compound, where the cyclic sulfonate compound includes at least one of 1,3-propene sultone, 1,3-propane sultone, or 1,4-butane sultone; and based on the mass of the electrolyte, a mass percentage of the cyclic sulfonate compound is 0.01% to 5%;

In some embodiments, the electrolyte further includes an unsaturated nitrile compound, where the unsaturated nitrile compound includes at least one of 3-hexenedinitrile or butenedinitrile; and based on the mass of the electrolyte, a mass percentage of the unsaturated nitrile compound is 0.01% to 5%.

In some embodiments, the electrolyte further includes an unsaturated acid anhydride compound, where the unsaturated acid anhydride compound includes at least one of maleic anhydride, 2,3-dimethylmaleic anhydride, itaconic anhydride, or citraconic anhydride; and based on the mass of the electrolyte, a mass percentage of the unsaturated acid anhydride compound is 0.01% to 5%.

In some embodiments, the electrolyte further includes an unsaturated silane compound, where the unsaturated silane compound includes at least one of triallylmethoxysilane, allyltrimethoxysilane, allyloxytrimethylsilane, or propynyloxytrimethylsilane; and based on the mass of the electrolyte, a mass percentage of the unsaturated silane compound is 0.01% to 5%.

A foregoing compound, due to its double bond, can undergo cross-linking reaction with the compound of formula (I) during the charge and discharge process of the electrochemical device, promoting the uniform formation of the SEI film, further improving the cycling performance and high-temperature storage performance of the electrochemical device.

In some embodiments, the electrolyte further includes another organic solvent, such as one or more selected from a group consisting of carbonate solvent and ether solvent. Exemplarily, the organic solvent may also include one or more selected from a group consisting of ethylene carbonate (EC), propylene carbonate (PC), butylene carbonate, methyl

ethyl carbonate, dimethyl carbonate, diethyl carbonate (DEC), dipropyl carbonate, methyl propyl carbonate, ethyl propyl carbonate, ethylene glycol dimethyl ether (DME), tetrahydrofuran (THF), and dioxolane (DOL).

The electrolyte of this application also contains an electrolyte salt. The electrolyte salt is an electrolyte salt known in the art that is suitable for electrochemical devices. For different electrochemical devices, appropriate electrolyte salts can be selected. For example, for lithium-ion batteries, the electrolyte salt is usually a lithium salt.

In some embodiments, the lithium salt includes at least one of an organic lithium salt or an inorganic lithium salt. Exemplarily, the lithium salt may include lithium hexafluorophosphate $LiPF_6$.

[Negative electrode plate]

The negative electrode plate includes a negative electrode current collector and a negative electrode active material layer disposed on at least one surface of the negative electrode current collector, and the negative electrode active material layer contains a negative electrode active material.

In some embodiments, the structure of the negative electrode plate is a structure known in the art that can be used for electrochemical devices.

In some embodiments, the negative electrode current collector includes a metal, such as but not limited to, copper foil, nickel foil, stainless steel foil, titanium foil, nickel foam, copper foam, a polymer base coated with conductive metal, or a combination thereof.

The negative electrode active material can be selected from any material known in the art capable of reversibly intercalating and de-intercalating active ions that is suitable for use as a negative electrode active material for an electrochemical device.

In some embodiments, the negative electrode active material contains a silicon-based material.

In some embodiments, the silicon-based material includes a matrix and a protective layer located on a surface of the matrix, where the protective layer includes an element M, and the element M includes at least one of element carbon C, element titanium Ti, element aluminum Al, element zinc Zn, element sulfur S, element phosphorus P, element boron B, or element nitrogen N. Optionally, the matrix may be nanoparticles, and the nanoscale particles can significantly alleviate the volume change problem of the silicon-based material, reducing the volume change, thereby improving the overall structural stability of the negative electrode active material layer and improving the cycling performance of the electrochemical device. The protective layer being coated on the surface of the matrix can further alleviate the volume change of the matrix, and the metal ions, carbon, and the like in the protective layer can improve the conductivity of the silicon-based material, which is conducive to improving the cycling performance and high-temperature storage performance of the electrochemical device. In addition, the protective layer can reduce the generation of by-products on the surface of the silicon-based material during the cycle process, which is conducive to further improving the cycling performance of the electrochemical device. Exemplarily, a material of the protective layer includes carbon, aluminum oxide $Al_2O_3$, titanium oxide $TiO_2$, and zinc oxide ZnO.

In some embodiments, the matrix includes at least one of a silicon-oxygen composite material, a silicon-carbon composite material, or elemental silicon. Specifically, the general formula of the silicon-oxygen composite material is $SiO_x$, where $0.5 \leq x \leq 1.5$. The elemental oxygen may be present in the silicon-carbon composite material. The mass ratio of the element silicon, element carbon, and element oxygen in the silicon-carbon composite material is (1 to 6): (1 to 3): (1 to 0).

In some embodiments, based on a mass of the protective layer, a content of the element M in the protective layer is 150ppm to 6500ppm. The protective layer can effectively alleviate the volume change of the matrix and is conducive to the capacity performance of the matrix. Exemplarily, the content of the element M in the protective layer may be 150ppm, 200ppm, 500ppm, 800ppm, 1000ppm, 1500ppm, 2000ppm, 2500ppm, 3000ppm, 3500ppm, 4000ppm, 4500ppm, 5000ppm, 5500ppm, 6000ppm, 6500ppm, or in a range defined by any two of these values.

In some embodiments, in addition to the silicon-based material, the negative electrode active material may additionally include at least one of lithium metal, lithium metal alloy, carbon material, or transition metal oxide. Optionally, the negative electrode active material further includes a carbon material. In some embodiments, the carbon material may be selected from any carbon material known in the art that can be used as a carbon-based negative electrode active material for an electrochemical device. Based on a total mass of the carbon material and the silicon-based material, a mass percentage of the carbon material is 2% to 80%. Exemplarily, the mass percentage of the carbon material is 2%, 5%, 10%, 20%, 30%, 40%, 50%, 60%, 70%, 80%, or in a range defined by any two of these values. The mixed use of carbon material and silicon-based material can improve the cycling performance of the electrochemical device. In some embodiments, the carbon material includes at least one of natural graphite, artificial graphite, crystalline graphite, soft carbon, hard carbon, pyrolytic carbon, mesophase pitch-based carbon fiber, mesophase carbon microbeads, mesophase pitch, or high-temperature calcined carbon.

In some embodiments, the negative electrode active material layer may further include a negative electrode binder, and a mass ratio of the negative electrode active material to the negative electrode binder is (80 to 100): (0.5 to 10). The negative electrode plate with the above mass ratio has good overall performance, not only ensuring good adhesion of

the negative electrode active material layer but also ensuring high energy density of the electrochemical device.

As an example of the negative electrode binder, the negative electrode binder includes at least one of polyvinylidene fluoride-hexafluoropropylene (PVDF-co-HFP), polyvinylidene fluoride, polyacrylonitrile, acrylate polymer, polyvinyl alcohol, carboxymethyl cellulose, hydroxypropyl cellulose, polyvinyl chloride, carboxylated polyvinyl chloride, polyvinylpyrrolidone, polyurethane, polytetrafluoroethylene, styrene-butadiene rubber, acrylated styrene-butadiene rubber, epoxy resin, or nylon.

In some embodiments, the negative electrode active material layer may further include a negative electrode conductive agent. As an example of the negative electrode conductive agent, the negative electrode conductive agent is used to provide conductivity for the electrode, and it can include any conductive material as long as it does not cause a chemical change. The negative electrode conductive agent includes any one of a carbon-based material, a metal-based material, or a conductive polymer, or a mixture thereof. In some embodiments, the carbon-based material includes at least one of carbon black, acetylene black, Ketjen black, carbon fiber, carbon nanotubes, or graphene. In some embodiments, the metal-based material includes at least one of metal powder or metal fiber of copper, nickel, aluminum, silver, and the like. In some embodiments, the conductive polymer includes a polyphenylene derivative.

In some embodiments, a preparation method of the negative electrode plate is a negative electrode plate preparation method known in the art that can be used for electrochemical devices. In some embodiments, in the preparation of the negative electrode slurry, the negative electrode active material and the negative electrode binder are typically added, and as needed, the negative electrode conductive agent and thickener are added. These are then dissolved or dispersed in a solvent to form the negative electrode slurry. The solvent is evaporated and removed during the drying. The solvent is a solvent known in the art that can be used for the negative electrode active material layer, such as but not limited to, water. The thickener is a thickener known in the art that can be used for the negative electrode active material layer, such as but not limited to, sodium carboxymethyl cellulose.

This application does not particularly impose any limitation on the mixing ratio of the negative electrode active material, negative electrode binder, and thickener in the negative electrode active material layer, and the mixing ratio can be controlled based on the desired performance of the electrochemical device.

In some embodiments, the porosity of the negative electrode active material layer is P, where $10\%\leq P\leq 50\%$. The porosity of the negative electrode active material layer has the meaning known in the art and can be tested using known equipment and methods in the art, for example, by gas displacement method. The porosity $P=(V1-V2)/V1\times 100\%$, where V1 represents the apparent volume, and V2 represents the true volume.

The porosity of the negative electrode active material layer being within the above range enables the electrolyte to fully infiltrate the negative electrode active material layer, effectively shortening the transport distance of lithium ions and improving the kinetic performance of the electrochemical device; and in addition, the particles in the negative electrode active material layer are in close contact, maintaining effective contact between the particles during the charge and discharge process, thus ensuring the cycling performance of the electrochemical device. Exemplarily, the porosity P of the negative electrode active material layer may be 10%, 20%, 22%, 25%, 28%, 30%, 32%, 35%, 38%, 40%, 50%, or in a range defined by any two of these values. In some embodiments, $20\%\leq P\leq 40\%$.

[Positive electrode plate]

The positive electrode plate is a positive electrode plate known in the art that can be used for electrochemical devices. In some embodiments, the positive electrode plate includes a positive electrode current collector and a positive electrode active material layer. The positive electrode active material layer is disposed on a surface of the positive electrode current collector. The positive electrode active material layer contains a positive electrode active material.

In some embodiments, the structure of the positive electrode plate is a structure known in the art that can be used for electrochemical devices.

In some embodiments, the positive electrode current collector is a metal, such as but not limited to, aluminum foil.

The positive electrode active material can be selected from any material known in the art capable of reversibly intercalating and de-intercalating active ions that is suitable for use as a positive electrode active material for an electrochemical device. For a lithium-ion battery, the positive electrode active material usually contains lithium ions.

In some embodiments, the positive electrode active material includes a positive electrode material capable of absorbing and releasing lithium, including but not limited to lithium cobalt oxide, lithium nickel cobalt manganese oxide, lithium nickel cobalt aluminum oxide, lithium manganese oxide, lithium iron manganese phosphate, lithium iron phosphate, and a lithium-rich manganese-based material.

In some embodiments, the positive electrode active material layer further includes a positive electrode binder and a positive electrode conductive agent. The positive electrode binder is used to improve the adhesion between the positive electrode active material particles and between the positive electrode active material particles and the current collector. In some embodiments, the positive electrode binder includes at least one of polyvinyl alcohol, carboxymethyl cellulose, hydroxypropyl cellulose, diacetyl cellulose, polyvinyl chloride, carboxylated polyvinyl chloride, polyvinylpyrrolidone,

polyurethane, polytetrafluoroethylene, polyvinylidene fluoride, vinylidene fluoride-hexafluoropropylene copolymer, styrene-butadiene rubber, acrylated styrene-butadiene rubber, epoxy resin, or nylon. The positive electrode conductive agent is used to provide conductivity for the electrode, and it can include any conductive material as long as it does not cause a chemical change. In some embodiments, the positive electrode conductive agent includes at least one of carbon black, acetylene black, Ketjen black, carbon fiber, carbon nanotubes, graphene, metal powder, metal fiber, or a polyphenylene derivative. In some embodiments, the metal in the metal powder and metal fiber includes at least one of copper, nickel, aluminum, or silver.

In some embodiments, a preparation method of the positive electrode plate is a positive electrode plate preparation method known in the art that can be used for electrochemical devices. In some embodiments, in the preparation of the positive electrode slurry, a positive electrode active material, positive electrode binder, and positive electrode conductive agent are typically added. These are then dissolved or dispersed in a solvent to form the positive electrode slurry. The solvent is evaporated and removed during the drying. The solvent is a solvent known in the art that can be used for the positive electrode active material layer, such as but not limited to, N-methylpyrrolidone (NMP).

[Separator]

The separator is a separator known in the art that can be used for electrochemical devices, such as but not limited to, a polyolefin-based porous film. In some embodiments, the separator includes at least one of polyethylene (PE), ethylenepropylene copolymer, polypropylene (PP), ethylene-butene copolymer, ethylene-hexene copolymer, or ethylene-methyl methacrylate copolymer.

In some embodiments, the separator is a single-layer separator or a multilayer separator.

In some embodiments, the separator is coated with a coating. In some embodiments, the coating includes at least one of an organic coating and an inorganic coating, where the organic coating includes at least one of polyvinylidene fluoride, vinylidene fluoride-hexafluoropropylene copolymer, polyacrylonitrile, polyimide, acrylonitrile-butadiene copolymer, acrylonitrile-styrene-butadiene copolymer, acrylate polymer, acrylic acid-styrene copolymer, polydimethylsiloxane, sodium polyacrylate, or sodium carboxymethyl cellulose; and the inorganic coating includes inorganic particles and a binder, where the inorganic particles include at least one of $SiO_2$, $Al_2O_3$, CaO, $TiO_2$, $ZnO_2$, MgO, $ZrO_2$, or $SnO_2$.

This application does not particularly impose any limitation on the form and thickness of the separator. The preparation method of the separator is a separator preparation method known in the art that can be used for electrochemical devices.

## Electronic device

This application further provides an electronic device, including the electrochemical device described above in this application.

The electronic device of this application may be any electronic device, such as but not limited to, notebook computers, pen-input computers, mobile computers, electronic book players, portable telephones, portable fax machines, portable copiers, portable printers, stereo headsets, video recorders, liquid crystal display televisions, portable cleaners, portable CD players, mini-disc players, transceivers, electronic notebooks, calculators, storage cards, portable recorders, radios, backup power sources, motors, automobiles, motorcycles, motor bicycles, bicycles, lighting appliances, toys, game machines, clocks, electric tools, flash lamps, cameras, large household batteries, and lithium-ion capacitors.

The following provides further explanation of the technical solution of this application by taking lithium-ion batteries as an example and in conjunction with comparative examples and examples. In the following examples and comparative examples, all reagents, materials, and instruments used are commercially available or synthesized unless otherwise specified.

### Example 1-1

### Preparation of lithium-ion battery

(1) Preparation of positive electrode plate

A positive electrode active material lithium cobalt oxide ($LiCoO_2$), a conductive agent Super P, and a binder polyvinylidene fluoride were mixed at a weight ratio of 97:1.5:1.5, added with N-methylpyrrolidone (NMP), and the obtained mixture was stirred to uniformity by using a vacuum stirrer to obtain a positive electrode slurry, where a solid content of the positive electrode slurry was 72 wt%. The positive electrode slurry was uniformly applied onto one surface of an aluminum foil of a positive electrode current collector. The aluminum foil was dried at 85°C to obtain a positive electrode plate with a single surface coated with the positive electrode active material layer. The same steps were repeated on

another surface of the aluminum foil of the positive electrode current collector to obtain a positive electrode plate with two surfaces coated with the positive electrode active material layer. The positive electrode plate was then cold-pressed, cut, and slit, followed by drying under vacuum at 85°C for 4 hours to obtain the positive electrode plate.

(2) Preparation of negative electrode plate

A negative electrode active material (artificial graphite and silicon oxide SiO composite material coated with metal oxide $Al_2O_3$ (with a content of Al of 184ppm in the coating layer)), a conductive agent Super P, sodium carboxymethyl cellulose (CMC), and styrene-butadiene rubber (SBR) were mixed at a weight ratio of 96.2:1.5:0.5:1.8, added with deionized water, and the mixture was stirred to uniformity by using a vacuum stirrer to obtain the negative electrode slurry, where a solid content of the negative electrode slurry was 54wt%. The negative electrode slurry was uniformly applied onto one surface of a copper foil of a negative electrode current collector. The copper foil was dried at 85°C to obtain a negative electrode plate with a single surface coated with the negative electrode active material layer. The same steps were repeated on another surface of the copper foil of the negative electrode current collector to obtain a negative electrode plate with two surfaces coated with the negative electrode active material layer. The negative electrode plate was then cold-pressed, cut, and slit, followed by drying under vacuum at 120°C for 12 hours to obtain the negative electrode plate. Through the controlling of a mass ratio of the silicon-based material in the negative electrode active material and a unit area coating weight of the negative electrode active material layer, a content Y of the element silicon in a unit coating area of the negative electrode active material layer was adjusted to 2.0 $mg/cm^2$.

(3) Preparation of electrolyte

In a dry argon atmosphere glove box, ethylene carbonate (EC), propylene carbonate (PC), and diethyl carbonate (DEC) were mixed at a weight ratio of 1:2:7, added with an additive which is a compound of formula (I), and its content was shown in Table 1. The obtained mixture was fully stirred, and added with lithium salt $LiPF_6$, and then the mixture was uniformly mixed to obtain the electrolyte. Based on a mass of the electrolyte, a mass concentration of $LiPF_6$ was 12.5%.

(4) Preparation of separator

A porous polyethylene (PE) film with a thickness of 8μm was used as the separator.

(5) Preparation of lithium-ion battery

The positive electrode plate, the separator, and the negative electrode plate were stacked in sequence so that the separator was located between the positive electrode plate and the negative electrode plate to provide separation. Then, the resulting stack was wound to form a jelly roll. After tabs were welded, the jelly roll was placed in an outer package aluminum-plastic film. The prepared electrolyte was injected into the jelly roll that was dried, followed by processes such as vacuum packaging, standing, formation, shaping, and capacity testing to obtain a pouch lithium-ion battery.

**Comparative example 1-1 to comparative example 1-3** were different from example 1-1 in that the presence and the type of the additive were adjusted.

**Example 1-2 to example 1-9** were different from example 1-1 in that the type of the compound of formula (I) was adjusted.

**Example 1-10 to example 1-15** were different from example 1-1 in that the percentage a% of the compound of formula (I) was adjusted.

**Example 1-16 to example 1-25** were different from example 1-1 in that at least one of the mass ratio of the silicon-based material in the negative electrode active material and the unit area coating weight of the negative electrode active material layer was adjusted, thereby distribution of the Si element was adjusted.

**Comparative example 2-1** was different from example 1-1 in that no compound of formula (I) was added in comparative example 2-1, only FEC and a carboxylic ester solvent were added.

**Example 2-1 to example 2-7** were different from example 1-1 in that FEC was added in example 2-1 to example 2-7.

**Example 2-8 to example 2-26** were different from example 1-1 in that FEC and a carboxylic ester solvent were added in example 2-8 to example 2-26, and the type of the compound of formula (I) was adjusted.

**Example 3-1 to example 3-8** were different from example 1-1 in that an additive containing double bonds was added, and a percentage of the compound of formula (I) and the type and percentage of the additive containing double bonds were adjusted.

**Example 4-1 to example 4-8** were different from example 3-3 in that the presence of the protective layer and the content of the metal element in the protective layer were adjusted.

**Example 5-1 to example 5-5** were different from example 3-3 in that at least the porosity of the negative electrode active material layer was adjusted in example 5-1 to example 5-5.

**Related parameters of examples and comparative examples are shown in Table 1 to Table 5.**

**Tests:**

**I. Test for parameters of negative electrode plate**

1. Measurement of the content Y of the element silicon in the negative electrode active material layer per unit coating area:

A negative electrode plate with a certain coating area of the negative electrode active material layer was taken, and the material excluding the negative electrode current collector was scraped off and weighed. A certain content of concentrated nitric acid was added for microwave digestion to obtain a solution. The obtained solution and filter residue were washed multiple times and diluted to a certain volume. A plasma intensity of the element silicon in the solution was tested using an inductively coupled plasma optical emission spectrometer ICP-OES. The silicon content in the solution was calculated based on the standard curve of the measured element, thereby determining the mass of the element silicon in the material. The mass of the element silicon was divided by the area of the negative electrode active material layer to obtain the content Y of the element silicon per unit coating area of the negative electrode active material layer.

**Test for performance of lithium-ion battery**

1. Cycling performance test:

At 35°C, the lithium-ion battery was charged at a constant current of 2C to 4.45 V, then charged at a constant voltage until the current reached 0.05C. After being left for standing for 5min, the battery was discharged at 0.5C to 3.0 V. This charge-discharge cycle was repeated 500 times. The first discharge capacity was recorded as C0, and the discharge capacity for the 500th cycle was recorded as C1.

The cycle capacity retention rate (%)=C1/C0×100%.

2. Storage test:

At room temperature, the lithium-ion battery was charged at a constant current of 2C to 4.45 V, then charged at a constant voltage until the current reached 0.05C. The battery was then placed in a 70°C oven for storage for 7 days. A thickness of the lithium-ion battery was measured with a micrometer at the time of placing the battery into the oven and at the time of removing the battery from the oven. The thickness of the battery when it was placed into the oven was recorded as D0, and the thickness of the battery when it was removed from the oven was recorded as D1.

High-temperature storage thickness growth rate (%)=(D1/D0-1)×100%.

**Test result:**

**Table 1**

| Item | Additive | | Negative electrode plate | | | a/Y | Lithium-Ion Battery Performance | |
|---|---|---|---|---|---|---|---|---|
| | Type | Mass Percentage (a%) | Mass Percentage of Silicon-Based Material in Negative Electrode Active Material | Unit Area Coating Weight of Negative Electrode Active Material Layer ($mg/cm^2$) | Si Element Distribution Y ($mg/cm^2$) | | Capacity Retention Rate after 500 Cycles at 35°C and 4.45 V | Thickness Growth Rate after 7 Days Storage at 70°C |
| Comparative example 1-1 | / | / | 30% | 2.0 | 0.38 | / | 48.6% | 55.7% |

(continued)

| Item | Additive | | Negative electrode plate | | | a/Y | Lithium-Ion Battery Performance | |
|---|---|---|---|---|---|---|---|---|
| | Type | Mass Percentage (a%) | Mass Percentage of Silicon-Based Material in Negative Electrode Active Material | Unit Area Coating Weight of Negative Electrode Active Material Layer ($mg/cm^2$) | Si Element Distribution Y ($mg/cm^2$) | | Capacity Retention Rate after 500 Cycles at 35°C and 4.45 V | Thickness Growth Rate after 7 Days Storage at 70°C |
| Comparative example 1-2 | Vinylene carbonate (VC) | 1.0% | 30% | 2.0 | 0.38 | 2.6 | 53.5% | 58.5% |
| Comparative example 1-3 | Maleic anhydride | 1.0% | 30% | 2.0 | 0.38 | 2.6 | 55.8% | 45.6% |
| Example 1-1 | Formula (I-1) | 1.0% | 30% | 2.0 | 0.38 | 2.6 | 67.4% | 34.8% |
| Example 1-2 | Formula (I-2) | 1.0% | 30% | 2.0 | 0.38 | 2.6 | 64.3% | 37.4% |
| Example 1-3 | Formula (I-3) | 1.0% | 30% | 2.0 | 0.38 | 2.6 | 63.8% | 37.9% |
| Example 1-4 | Formula (I-4) | 1.0% | 30% | 2.0 | 0.38 | 2.6 | 65.7% | 36.9% |
| Example 1-5 | Formula (I-5) | 1.0% | 30% | 2.0 | 0.38 | 2.6 | 66.2% | 36.2% |
| Example 1-6 | Formula (I-7) | 1.0% | 30% | 2.0 | 0.38 | 2.6 | 61.8% | 40.2% |
| Example 1-7 | Formula (I-9) | 1.0% | 30% | 2.0 | 0.38 | 2.6 | 62.3% | 39.5% |
| Example 1-8 | Formula (I-11) | 1.0% | 30% | 2.0 | 0.38 | 2.6 | 62.6% | 38.6% |
| Example 1-9 | Formula (I-15) | 1.0% | 30% | 2.0 | 0.38 | 2.6 | 63.7% | 37.9% |
| Example 1-10 | Formula (I-1) | 0.04% | 30% | 2.0 | 0.38 | 0.11 | 60.2% | 41.3% |
| Example 1-11 | Formula (I-1) | 0.1% | 30% | 2.0 | 0.38 | 0.3 | 64.3% | 37.1% |
| Example 1-12 | Formula (I-1) | 0.5% | 30% | 2.0 | 0.38 | 1.3 | 66.7% | 34.9% |
| Example 1-13 | Formula (I-1) | 3.0% | 30% | 2.0 | 0.38 | 7.9 | 65.2% | 35.8% |
| Example 1-14 | Formula (I-1) | 5.0% | 30% | 2.0 | 0.38 | 13.2 | 62.2% | 39.2% |
| Example 1-15 | Formula (I-1) | 7.0% | 30% | 2.0 | 0.38 | 18.4 | 58.9% | 39.8% |
| Example 1-16 | Formula (I-1) | 1.0% | 15% | 2.0 | 0.19 | 5.3 | 68.6% | 33.2% |

(continued)

| Item | Additive | | Negative electrode plate | | | a/Y | Lithium-Ion Battery Performance | |
|---|---|---|---|---|---|---|---|---|
| | Type | Mass Percentage (a%) | Mass Percentage of Silicon-Based Material in Negative Electrode Active Material | Unit Area Coating Weight of Negative Electrode Active Material Layer ($mg/cm^2$) | Si Element Distribution Y ($mg/cm^2$) | | Capacity Retention Rate after 500 Cycles at 35°C and 4.45 V | Thickness Growth Rate after 7 Days Storage at 70°C |
| Example 1-17 | Formula (I-1) | 1.0% | 10% | 6.0 | 0.38 | 2.6 | 65.8% | 36.5% |
| Example 1-18 | Formula (I-1) | 1.0% | 80% | 1.2 | 0.60 | 1.7 | 60.9% | 38.5% |
| Example 1-19 | Formula (I-1) | 1.0% | 70% | 3.5 | 1.53 | 0.7 | 58.8% | 43.7% |
| Example 1-20 | Formula (I-1) | 1.0% | 2% | 8.0 | 0.10 | 10 | 66.9% | 34.9% |
| Example 1-24 | Formula (I-1) | 1.0% | 30% | 5.0 | 1.00 | 1.0 | 64.5% | 36.8% |
| Example 1-25 | Formula (I-1) | 1.0% | 30% | 6.0 | 1.20 | 0.8 | 63.8% | 37.2% |

In Table 1, "/" indicates that such substance is not added.

The unit area coating weight of the negative electrode active material layer refers to the coating weight of the negative electrode active material layer per unit area on the negative electrode current collector, with the unit being $mg/cm^2$.

Si element distribution Y refers to the content of element silicon per unit coating area of the negative electrode active material layer, with the unit being $mg/cm^2$.

Table 1 shows the impact of the compound of formula (I) and Si element distribution on the cycle and high-temperature storage performance of lithium-ion batteries. The results indicate that, compared to vinylene carbonate VC and maleic anhydride, the compound of formula (I) can significantly enhance the cycling performance and high-temperature storage performance of lithium-ion batteries. With the electrolyte added with the compound of formula (I), the unsaturated double bond structure in its molecule can polymerize into a film on the surface of the silicon-based material, which thereby introduces a rigid bridge ring structure into the SEI film to suppress the volume swelling of the silicon-based material; at the same time, due to the steric hindrance of the bridge ring structure in the compound of formula (I), a relatively small film-forming impedance can be obtained, and the dense accumulation of by-products on the surface of the active material during the cycle process can be inhibited, promoting the transfer of lithium ions between the active material and the electrolyte; additionally, the compound of formula (I) can also form a film on the positive electrode, where the anhydride/amide structure in the compound can inhibit the destruction of the electrolyte interface film on the surface of the positive electrode material by trace amounts of water and acid in the electrolyte, thereby inhibiting the oxidative decomposition of the solvent on the surface of the positive electrode material, and as a result, enhancing the cycling performance and high-temperature storage performance of the lithium-ion battery.

Furthermore, when the percentage a% of the compound of formula (I) is 0.1% to 5%, Y is 0.1 to 1.2, and $0.3 \leq a/Y \leq 13.5$, the cycling performance and high-temperature storage performance of the lithium-ion battery are both excellent. This range can meet the requirement for the amount of additive needed for the formation and repair of the SEI film, while also avoiding a decline in the cycling performance of the lithium-ion battery due to an excessive percentage of the compound of formula (I).

**Table 2**

| Item | Electrolyte | | | | | Si Element Distribution Y ($mg/cm^2$) | (b/c)/Y | Lithium-ion Battery Performance | |
|---|---|---|---|---|---|---|---|---|---|
| | Compound of Formula (I) | | Mass percentage of FEC (b%) | Carboxylic ester solvent | | | | Capacity Retention Rate after 500 Cycles at 35°C and 4.45 V | Thickness Growth Rate after 7 Days Storage at 70°C |
| | Type | Mass Percentage (a%) | | Type | Mass Percentage (c%) | | | | |
| Example 1-1 | Formula (I-1) | 1.0% | / | / | / | 0.38 | / | 67.4% | 34.8% |
| Comparative example 2-1 | / | / | 10% | Ethyl propionate | 20.0% | 0.38 | 1.3 | 54.6% | 61.7% |
| Example 2-1 | Formula (I-1) | 1.0% | 1% | / | / | 0.38 | / | 70.2% | 35.0% |
| Example 2-2 | Formula (I-1) | 1.0% | 3% | / | / | 0.38 | / | 72.3% | 35.3% |
| Example 2-3 | Formula (I-1) | 1.0% | 5% | / | / | 0.38 | / | 75.4% | 35.7% |
| Example 2-4 | Formula (I-1) | 1.0% | 10% | / | / | 0.38 | / | 78.1% | 37.1% |
| Example 2-5 | Formula (I-1) | 1.0% | 15% | / | / | 0.38 | / | 76.6% | 37.6% |
| Example 2-6 | Formula (I-1) | 1.0% | 17% | / | / | 0.38 | / | 75.5% | 39.3% |
| Example 2-7 | Formula (I-1) | 1.0% | 20% | / | / | 0.38 | / | 73.2% | 42.1% |
| Examples 2-8 | Formula (I-1) | 1.0% | 1% | Ethyl propionate | 20.0% | 0.38 | 0.13 | 74.5% | 35.6% |
| Example 2-9 | Formula (I-1) | 1.0% | 3% | Ethyl propionate | 20.0% | 0.38 | 0.39 | 75.6% | 36.2% |
| Example 2-10 | Formula (I-1) | 1.0% | 5% | Ethyl propionate | 20.0% | 0.38 | 0.66 | 78.3% | 38.3% |
| Example 2-11 | Formula (I-1) | 1.0% | 10% | Ethyl propionate | 20.0% | 0.38 | 1.3 | 82.5% | 40.3% |
| Example 2-12 | Formula (I-1) | 1.0% | 15% | Ethyl propionate | 20.0% | 0.38 | 1.97 | 80.5% | 42.5% |
| Example 2-13 | Formula (I-1) | 1.0% | 17% | Ethyl propionate | 20.0% | 0.38 | 2.24 | 80.2% | 42.8% |
| Example 2-14 | Formula (I-1) | 1.0% | 20% | Ethyl propionate | 20.0% | 0.38 | 2.63 | 78.1% | 45.2% |
| Example 2-15 | Formula (I-1) | 1.0% | 22% | Ethyl propionate | 20.0% | 0.38 | 2.89 | 76.7% | 46.9% |
| Examples 2-16 | Formula (I-1) | 1.0% | 10% | Ethyl propionate | 5.0% | 0.38 | 5.26 | 76.5% | 35.6% |
| Examples 2-17 | Formula (I-1) | 1.0% | 10% | Ethyl propionate | 9.0% | 0.38 | 2.92 | 80.2% | 37.6% |
| Examples 2-18 | Formula (I-1) | 1.0% | 10% | Ethyl propionate | 15.0% | 0.38 | 1.75 | 81.5% | 39.4% |

(continued)

| Item | Electrolyte | | | | | Si Element Distribution Y ($mg/cm^2$) | (b/c)/Y | Lithium-ion Battery Performance | |
|---|---|---|---|---|---|---|---|---|---|
| | Compound of Formula (I) | | Mass percentage of FEC (b%) | Carboxylic ester solvent | | | | Capacity Retention Rate after 500 Cycles at 35°C and 4.45 V | Thickness Growth Rate after 7 Days Storage at 70°C |
| | Type | Mass Percentage (a%) | | Type | Mass Percentage (c%) | | | | |
| Examples 2-19 | Formula (I-1) | 1.0% | 10% | Ethyl propionate | 30.0% | 0.38 | 0.88 | 81.2% | 42.9% |
| Examples 2-20 | Formula (I-1) | 1.0% | 10% | Ethyl propionate | 60.0% | 0.38 | 0.44 | 77.3% | 45.9% |
| Examples 2-21 | Formula (I-1) | 1.0% | 10% | Ethyl propionate | 70.0% | 0.38 | 0.38 | 76.9% | 48.7% |
| Examples 2-22 | Formula (I-1) | 1.0% | 10% | Ethyl acetate | 10.0% | 0.38 | 2.63 | 79.3% | 38.6% |
| Examples 2-23 | Formula (I-1) | 1.0% | 10% | Propyl propionate | 10.0% | 0.38 | 2.63 | 79.8% | 38.8% |
| Examples 2-24 | Formula (I-1) | 1.0% | 10% | Ethyl difluoroacetate | 10.0% | 0.38 | 2.63 | 80.8% | 37.8% |
| Examples 2-25 | Formula (I-1) +formula (I-15) | 0.5%+0.5% | 10% | Ethyl difluoroacetate | 10.0% | 0.38 | 2.63 | 78.9% | 38.8% |
| Examples 2-26 | Formula (I-1) +formula (I-15) | 0.5%+0.5% | 10% | Ethyl acetate+ propyl propionate | 10%+ 10% | 0.38 | 1.32 | 78.2% | 39.6% |

In Table 2, "/" indicates that such substance is not added. Table 2, based on example 1-1, demonstrates the impact of FEC and the carboxylic ester solvent on the cycling and high-temperature storage performance of lithium-ion batteries. The results show that the addition of FEC can improve the long cycling performance of lithium-ion batteries because the fluorinated carbonate compound has a fluorine substituent group, where the group has a strong electron-withdrawing ability and is prone to reductive decomposition at a high potential, promoting the formation and repair of the SEI film; and the formed SEI film has a small impedance, which is conducive to the migration of lithium ions and the like, thereby improving the cycling performance of the lithium-ion battery. Moreover, the HF generated by the decomposition of the fluorinated carbonate compound at high temperatures can be captured by the anhydride/amide structure in a compound of formula (I), which inhibits its destruction of the positive electrode electrolyte interface film , thereby ensuring the high-temperature storage performance of the electrochemical device. Furthermore, the combined addition of FEC and carboxylic ester solvent can further improve the long cycling performance of lithium-ion batteries. When the electrolyte is added with the carboxylic ester solvent, its ion-conducting ability is greatly enhanced, which can reduce the impedance of the lithium-ion battery and improve the cycling performance of the lithium-ion battery. However, the carboxylic ester solvent is unstable on the surface of the silicon-based material and tends to decompose and generate gas at the negative electrode. The fluorinated carbonate compound can undergo reductive decomposition at a high potential, preferentially decomposing into a film on the surface of the silicon-based material before the carboxylic ester solvent, thereby effectively alleviating the reductive decomposition of the carboxylic ester solvent. Moreover, the HF generated by the decomposition of the fluorinated carbonate compound at high temperatures can be captured by the anhydride/amide structure in the compound of formula (I), which inhibits the destruction of the positive electrode electrolyte interface film caused by HF, thereby ensuring the high-temperature storage performance of the lithium-ion battery. Furthermore, when the conditions $5 \le b \le 17$ and $0.5 \le (b/c)/Y \le 3$ are met, both the cycling performance and high-temperature storage performance of the lithium-ion battery are excellent.

**Table 3**

| Item | Compound of Formula (I) | | Additive containing double bonds | | Capacity Retentio n Rate after 500 Cycles at 35°C and 4.45 V | Thicknes s Growth Rate after 7 Days Storage at 70°C |
|---|---|---|---|---|---|---|
| | Type | Percentag e a% | Type | Percentag e d% | | |
| Exampl e 1-1 | Formul a (I-1) | 1.0% | / | / | 67.4% | 34.8% |
| Exampl e 3-1 | Formul a (I-1) | 1.0% | VC | 1.0% | 74.3% | 38.6% |
| Exampl e 3-2 | Formul a (I-1) | 1.0% | 1,3-propene sultone | 1.0% | 75.8% | 36.5% |
| Exampl e 3-3 | Formul a (I-1) | 1.0% | VC+ 1,3-propane sultone | 1.0%+ 3.0% | 80.2% | 30.1% |
| Exampl e 3-4 | Formul a (I-1) | 1.0% | 3-hexenedinitrile | 1.0% | 77.2% | 33.8% |
| Exampl e 3-5 | Formul a (I-1) | 0.5% | 3-hexenedinitrile | 3.0% | 79.8% | 32.6% |
| Exampl e 3-6 | Formul a (I-1) | 1.0% | Maleic anhydride | 1.0% | 77.4% | 34.5% |
| Exampl e 3-7 | Formul a (I-1) | 1.0% | Triallylmethoxysilan e | 1.0% | 78.2% | 33.9% |
| Exampl e 3-8 | Formul a (I-1) | 0.5% | Maleic anhydride+ Triallylmethoxysilan e | 1.0%+ 1.0% | 80.1% | 31.1% |

In Table 3, "/" indicates that such substance is not added. Table 3 shows the impact of further adding other compounds containing double bonds on the cycling and high-temperature storage performance of lithium-ion batteries based on example 1-1. The results indicate that when a compound of formula (I) is present, further addition of other additives containing double bonds can significantly improve the cycling and high-temperature storage performance of

lithium-ion batteries. This improvement is because the aforementioned additives containing double bonds can undergo cross-linking reactions with the compound of formula (I) during charge and discharge, promoting the uniform formation of the SEI film and further enhancing the cycling performance and high-temperature storage performance of lithium-ion batteries.

**Table 4**

| Item | Protective layer | | | Lithium-Ion Battery Performance | |
|---|---|---|---|---|---|
| | Material | Metal Element | Metal Element Content (ppm) | Capacity Retention Rate after 500 Cycles at 35°C and 4.45 V | Thickness Growth Rate after 7 Days Storage at 70°C |
| Example 3-3 | $Al_2O_3$ | Al | 184 | 80.2% | 30.1% |
| Example 4-1 | / | / | / | 68.5% | 40.5% |
| Example 4-2 | $Al_2O_3$ | Al | 156 | 77.6% | 32.3% |
| Example 4-3 | $Al_2O_3$ | Al | 745 | 79.4% | 31.5% |
| Example 4-4 | $Al_2O_3$ | Al | 1633 | 78.6% | 31.9% |
| Example 4-5 | $Al_2O_3$ | Al | 3762 | 78.5% | 31.8% |
| Example 4-6 | $Al_2O_3$ | Al | 6318 | 68.6% | 40.5% |
| Example 4-7 | $TiO_2$ | Ti | 182 | 79.8% | 30.5% |
| Example 4-8 | $Al_2O_3+TiO_2$ | Al+Ti | 107+78 | 80.1% | 30.3% |

In Table 4, "/" indicates that such substance is not added. Table 4 shows the impact of coating a protective layer on a surface of a silicon-containing matrix material on the cycling and high-temperature storage performance of batteries based on example 3-3. The results indicate that by applying a protective layer (metal oxide) on the surface of the silicon-containing matrix material, the cycling and high-temperature storage performance of the battery can be improved. This improvement is primarily because the protective layer mitigates the volume swelling of the silicon-containing material during charge and discharge process, and the metal ions in the protective layer enhance the conductivity of the silicon-based material, thereby improving the cycling and high-temperature storage performance of the battery.

**Table 5**

| Item | Compound of Formula (I) | | Negative Electrode Plate | | Lithium-Ion Battery Performance | |
|---|---|---|---|---|---|---|
| | Type | Percentage a% | Unit Area Coating Weight of Negative Electrode Active Material Layer ($mg/cm^2$) | Porosity of Negative Electrode Active Material Layer (P%) | Capacity Retention Rate after 500 Cycles at 35°C and 4.45 V | Thickness Growth Rate after 7 Days Storage at 70°C |
| Example 3-3 | Formula (I-1) | 1.0% | 2.0 | 25% | 80.2% | 30.1% |
| Example 5-1 | Formula (I-1) | 1.0% | 2.0 | 12% | 74.50% | 38.6% |
| Example 5-2 | Formula (I-1) | 1.0% | 2.0 | 30% | 79.50% | 31.2% |
| Example 5-3 | Formula (I-1) | 1.0% | 2.0 | 40% | 78.80% | 32.6% |
| Example 5-4 | Formula (I-1) | 1.0% | 2.0 | 50% | 73.60% | 39.5% |
| Example 5-5 | Formula (I-1) | 0.5% | 2.0 | 20% | 78.30% | 33.1% |

Table 5 shows the impact of changing the porosity of the negative electrode active material layer on the cycling and high-temperature storage performance of the battery based on example 3-3. The results indicate that a porosity of the negative electrode active material layer between 20% and 40% ensures excellent cycling and high-temperature storage performance.

Although illustrative embodiments have been demonstrated and described, a person skilled in the art should understand that the foregoing embodiments are not to be construed as limiting this application, and that the embodiments may be changed, replaced, and modified without departing from the spirit, principle, and scope of this application.

## Claims

1. An electrochemical device, comprising a negative electrode plate and an electrolyte, wherein

   the negative electrode plate comprises a negative electrode active material layer, and the negative electrode active material layer comprises a silicon-based material; and
   the electrolyte comprises a compound of formula (I), wherein

   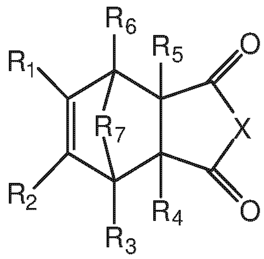
   formula (I)

   in formula (I),
   X is selected from an oxygen atom or N-$R_8$;
   $R_1$, $R_2$, $R_3$, $R_4$, $R_5$, $R_6$, and $R_8$ are each independently selected from a hydrogen atom, a halogen atom, substituted or unsubstituted $C_1$ to $C_{10}$ alkyl groups, substituted or unsubstituted $C_2$ to $C_{10}$ alkenyl groups, substituted or unsubstituted $C_2$ to $C_{10}$ alkynyl groups, substituted or unsubstituted $C_6$ to $C_{10}$ aryl groups, substituted or unsubstituted $C_1$ to $C_{10}$ alkoxy groups, substituted or unsubstituted $C_2$ to $C_{10}$ alkenoxy groups, substituted or unsubstituted $C_2$ to $C_{10}$ alkynoxy groups, substituted or unsubstituted $C_6$ to $C_{10}$ aryloxy groups, substituted or unsubstituted $C_1$ to $C_{10}$ alkoxyalkyl groups, substituted or unsubstituted $C_1$ to $C_{10}$ carboxyl groups, substituted or unsubstituted $C_2$ to $C_{10}$ carboxylic ester groups, substituted or unsubstituted $C_2$ to $C_{10}$ carbonate groups, a cyano group, an amino group, substituted or unsubstituted $C_1$ to $C_{10}$ nitrogen-containing groups, substituted or unsubstituted $C_1$ to $C_{10}$ sulfur-containing groups, substituted or unsubstituted $C_1$ to $C_{10}$ boron-containing groups, substituted or unsubstituted $C_1$ to $C_{10}$ silicon-containing groups, or substituted or unsubstituted $C_1$ to $C_{10}$ phosphorus-containing groups; and
   $R_7$ is selected from substituted or unsubstituted $C_1$ to $C_{10}$ alkylene groups, substituted or unsubstituted $C_3$ to $C_{10}$ cycloalkylene groups, substituted or unsubstituted $C_1$ to $C_{10}$ oxygen-containing groups, or substituted or unsubstituted $C_1$ to $C_{10}$ nitrogen-containing groups; wherein
   in a case of substitution, a substituent group comprises at least one of a halogen atom or a cyano group.

2. The electrochemical device according to claim 1, wherein based on an area of the negative electrode active material layer, a content of element silicon in the negative electrode active material layer is Y mg/cm$^2$; and based on a total mass of the electrolyte, a mass percentage of the compound of formula (I) is a%; satisfying: $0.1 \leq a/Y \leq 20$.

3. The electrochemical device according to claim 2, wherein the electrochemical device satisfies at least one of the following conditions:

   $$(1)\ 0.3 \leq a/Y \leq 13.5;$$

   $$(2)\ 0.01 \leq a \leq 10;$$

   and

(3) $0.1 \leq Y \leq 1.55$.

**4.** The electrochemical device according to claim 1, wherein the compound of formula (I) comprises at least one of compounds in a range of compound of formula (I-1) to compound of formula (I-20):

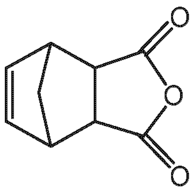 formula (I-1), 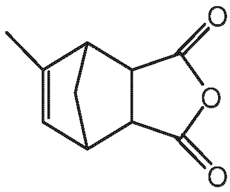 formula (I-2),

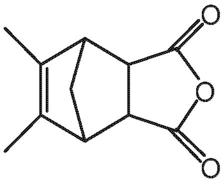 formula (I-3), 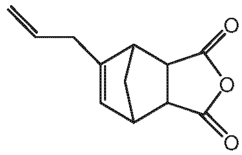 formula (I-4),

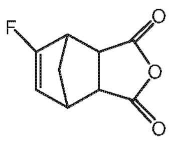 formula (I-5), 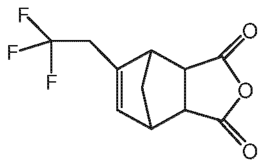 formula (I-6),

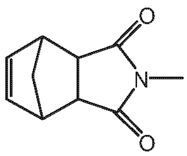 formula (I-7), 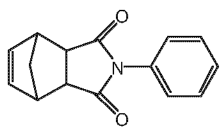 formula (I-8),

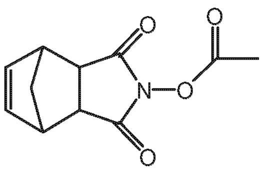 formula (I-9),

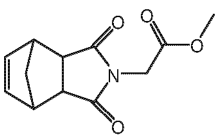 formula (I-10), 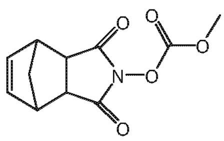 formula (I-11),

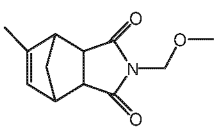 formula (I-12),

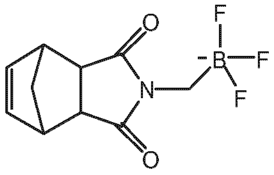 formula (I-13), 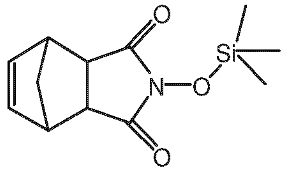 formula (I-14),

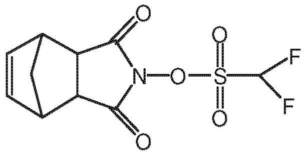 formula (I-15),

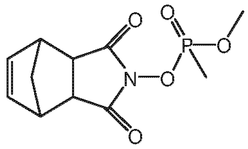 formula (I-16), 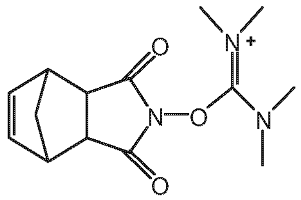 formula (I-17),

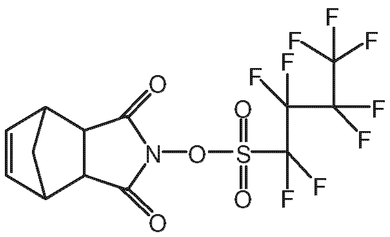 formula (I-18),

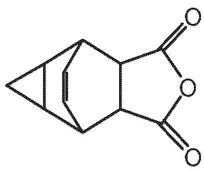 formula (I-19), and 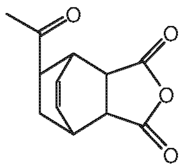 formula (I-20).

5. The electrochemical device according to claim 1 or 2, wherein the electrolyte further comprises a fluorinated carbonate compound, and based on the total mass of the electrolyte, a mass percentage of the fluorinated carbonate compound is b%, wherein $1 \leq b \leq 22$.

6. The electrochemical device according to claim 5, wherein based on the area of the negative electrode active material layer, the content of element silicon in the negative electrode active material layer is Y $mg/cm^2$; and the electrolyte further comprises a carboxylic ester solvent, and based on the total mass of the electrolyte, a mass percentage of the carboxylic ester solvent is c%, satisfying: $0.5 \leq (b/c)/Y \leq 3$.

7. The electrochemical device according to claim 6, wherein the electrochemical device satisfies at least one of the following conditions:

$$(1)\ 5 \leq b \leq 17;$$

$$(2)\ 5 \leq c \leq 70;$$

(3) the fluorinated carbonate compound comprises at least one of fluorinated ethylene carbonate, fluoropropylene carbonate, fluorodiethyl carbonate, difluoroethylene carbonate, bis(trifluoromethyl) carbonate, bis(pentafluoroethyl) carbonate, or bis(2,2,2-trifluoroethyl) carbonate;
(4) the carboxylic ester solvent comprises substituted or unsubstituted carboxylic ester with a total carbon atom quantity of 3 to 10 in the molecule, and in a case of substitution, the substituent group comprises the halogen atom; and
(5) the carboxylic ester solvent comprises at least one of methyl acetate, ethyl acetate, propyl acetate, butyl acetate, methyl propionate, ethyl propionate, propyl propionate, butyl propionate, ethyl fluoroacetate, propyl fluoroacetate, butyl fluoroacetate, ethyl fluoropropionate, propyl fluoropropionate, or butyl fluoropropionate.

**8.** The electrochemical device according to claim 1, wherein the electrochemical device satisfies at least one of the following conditions:

(1) the electrolyte further comprises an unsaturated cyclic carbonate compound, wherein the unsaturated cyclic carbonate compound comprises at least one of vinylene carbonate or vinyl ethylene carbonate; and based on a total mass of the electrolyte, a mass percentage of the unsaturated cyclic carbonate compound is 0.01% to 5%;
(2) the electrolyte further comprises a cyclic sulfonate compound, wherein the cyclic sulfonate compound comprises at least one of 1,3-propene sultone, 1,3-propane sultone, or 1,4-butane sultone; and based on the total mass of the electrolyte, a mass percentage of the cyclic sulfonate compound is 0.01% to 5%;
(3) the electrolyte further comprises an unsaturated nitrile compound, wherein the unsaturated nitrile compound comprises at least one of 3-hexenedinitrile or butenedinitrile; and based on the total mass of the electrolyte, a mass percentage of the unsaturated nitrile compound is 0.01% to 5%;
(4) the electrolyte further comprises an unsaturated acid anhydride compound, wherein the unsaturated acid anhydride compound comprises at least one of maleic anhydride, 2,3-dimethylmaleic anhydride, itaconic anhydride, or citraconic anhydride; and based on the total mass of the electrolyte, a mass percentage of the unsaturated acid anhydride compound is 0.01% to 5%; and
(5) the electrolyte further comprises an unsaturated silane compound, wherein the unsaturated silane compound comprises at least one of triallylmethoxysilane, allyltrimethoxysilane, allyloxytrimethylsilane, or propynyloxytrimethylsilane; and based on the total mass of the electrolyte, a mass percentage of the unsaturated silane compound is 0.01% to 5%.

**9.** The electrochemical device according to claim 1, wherein the silicon-based material comprises a matrix and a protective layer located on a surface of the matrix, the protective layer comprises an element M, and the element M comprises at least one of C, Ti, Al, Zn, S, P, B, or N; and the electrochemical device satisfies at least one of the following conditions:

(1) the matrix comprises at least one of a silicon-oxygen composite material, a silicon-carbon composite material, or elemental silicon; and
(2) based on a mass of the protective layer, a content of the element M in the protective layer is 150ppm to 6500ppm.

**10.** The electrochemical device according to claim 1, wherein the electrochemical device satisfies at least one of the following conditions:

(1) the negative electrode active material layer further comprises a carbon material; and based on a total mass of the carbon material and the silicon-based material, a mass percentage of the silicon-based material is 2% to 80%; and
(2) a porosity of the negative electrode active material layer is P, wherein 20%≤P≤40%.

**11.** An electronic device, comprising the electrochemical device according to any one of claims 1 to 10.

**INTERNATIONAL SEARCH REPORT**

International application No. **PCT/CN2022/140265**

**A. CLASSIFICATION OF SUBJECT MATTER**

H01M10/0567(2010.01)i; H01M10/0525(2010.01)i; H01M4/134(2010.01)i

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; WPABS; DWPI; USTXT; EPTXT; WOTXT; ISI; CNKI: 阳极, 负极, 硅, 电解液, 电解质, 桥环, 酸酐, 酰胺, 降冰片烯, anode, negative electrode, electrolyte, endocyclic, bridge, ring, anhydride, acylamide, norborn+

**C. DOCUMENTS CONSIDERED TO BE RELEVANT**

| Category* | Citation of document, with indication, where appropriate, of the relevant passages | Relevant to claim No. |
|---|---|---|
| X | CN 109690861 A (NEC CORP.) 26 April 2019 (2019-04-26) description, paragraphs [0010]-[0105] and [0183] | 1-11 |
| X | JP 2015056312 A (MITSUBISHI CHEMICAL CORP.) 23 March 2015 (2015-03-23) description, paragraphs [0006]-[0253] | 1-11 |
| X | US 2009191464 A1 (SAMSUNG SDI CO., LTD.) 30 July 2009 (2009-07-30) description, paragraphs [0020]-[0067] | 1-11 |
| A | CN 103339784 A (MITSUBISHI CHEMICAL CORP.) 02 October 2013 (2013-10-02) entire document | 1-11 |

☐ Further documents are listed in the continuation of Box C.  ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **19 July 2023** | **31 July 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2022/140265**

| Patent document cited in search report | Publication date (day/month/year) | Patent family member(s) | Publication date (day/month/year) |
|---|---|---|---|
| CN 109690861 A | 26 April 2019 | US 2019252716 A1 | 15 August 2019 |
| | | JPWO 2018052077 A1 | 27 June 2019 |
| | | JP 7059931 B2 | 26 April 2022 |
| | | WO 2018052077 A1 | 22 March 2018 |
| JP 2015056312 A | 23 March 2015 | None | |
| US 2009191464 A1 | 30 July 2009 | US 8802285 B2 | 12 August 2014 |
| | | KR 20090083710 A | 04 August 2009 |
| | | KR 101473321 B1 | 24 December 2014 |
| CN 103339784 A | 02 October 2013 | KR 20140040284 A | 02 April 2014 |
| | | KR 101690843 B1 | 28 December 2016 |
| | | KR 20140036148 A | 25 March 2014 |
| | | US 2013316229 A1 | 28 November 2013 |
| | | US 9653753 B2 | 16 May 2017 |
| | | WO 2012105404 A1 | 09 August 2012 |
| | | EP 2672561 A1 | 11 December 2013 |
| | | EP 2672561 A4 | 07 June 2017 |
| | | EP 2672561 B1 | 17 April 2019 |

Form PCT/ISA/210 (patent family annex) (July 2022)